Europäisches Patentamt

European Patent Office

Office européen des brevets

(19)

(11) Veröffentlichungsnummer: **0 052 850**
**B1**

(12) # EUROPÄISCHE PATENTSCHRIFT

(45) Veröffentlichungstag der Patentschrift:
28.09.83

(51) Int. Cl.³: **C 04 B 35/56**

(21) Anmeldenummer: **81109735.1**

(22) Anmeldetag: **17.11.81**

(54) Verfahren zur Herstellung eines polykristallinen Formkörpers aus Siliziumkarbid.

(30) Priorität: **24.11.80 DE 3044161**

(43) Veröffentlichungstag der Anmeldung:
**02.06.82 Patentblatt 82/22**

(45) Bekanntmachung des Hinweises auf die Patenterteilung:
**28.09.83 Patentblatt 83/39**

(84) Benannte Vertragsstaaten:
**DE FR GB IT NL SE**

(56) Entgegenhaltungen:
**DE-A-2 916 817**
**GB-A-1 017 962**
**GB-A-2 053 282**
**US-A-4 133 689**

(73) Patentinhaber: **Feldmühle Aktiengesellschaft,
Fritz-Vomfelde-Platz 4, D-4000 Düsseldorf 11 (DE)**

(72) Erfinder: **Gugel, Ernst, Prof. Dr., Dipl.-Ing.,
Lauterburgstrasse 47a, D-8633 Rödental (DE)**
Erfinder: **Leimer, Gerhard, Dr. Dipl.-Ing., Sonnenleite 23,
D-8633 Rödental (DE)**

(74) Vertreter: **Uhlmann, Hans, Dr. rer.nat., Dipl.-Chem. et al,
Gladbacher Strasse 189, D-4060 Viersen 1 (DE)**

EP 0 052 850 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung eines polykristallinen Formkörpers aus Siliziumkarbid

Die Erfindung bezieht sich auf die Herstellung von polykristallinen Formkörpern aus Siliziumkarbid mit einer Dichte von mindestens 98% der theoretischen Dichte des Siliziumkarbids.

Polykristalline Formkörper aus Siliziumkarbid zeichnen sich durch viele wertvolle Eigenschaften aus, wie Oxidationsbeständigkeit und Temperaturwechselbeständigkeit, günstiges Kriechverhalten, relativ niedrige Dichte, geringe thermische Ausdehnung sowie hohe Wärmeleitfähigkeit und große Härte. Aufgrund dieser Eigenschaften läßt sich Siliziumkarbid z. B. mit Vorteil als Werkstoff für Hochtemperaturmaschinenbauteile verwenden.

Vergleichsweise hohe Festigkeitswerte von bis zu 600 N/mm² und mehr erreicht man mit heißgepreßtem Siliziumkarbid, welches vom stofflichen Aufbau her praktisch nur Siliziumkarbid neben geringen Mengen an Aluminium-, Bor- und Eisenverbindungen enthält. Allerdings ist dieses Verfahren aufwendig, so daß es aus wirtschaftlichen Gründen nicht zum Einsatz kommt. Außerdem eignet sich das Verfahren nur für relativ einfache Formen.

Wesentlich freier in der Formgestaltung ist man beim drucklosen Sintern, von Siliziumkarbid.

In der DE-A-2 449 662 ist ein drucklos gesintertes Siliziumkarbid beschrieben. Das Wesentliche dieser Lehre besteht darin, äußerst feinkörniges Siliziumkarbidpulver zu verwenden, um eine bezüglich Elektroneutralität stark gestörte und damit sinteraktive Oberfläche zu erhalten, d. h. Pulver einzusetzen, bei denen Atombeweglichkeiten möglich sind. Ausgegangen wird von der β-Modifikation des Siliziumkarbids, weil bei dieser das Herstellungsverfahren so gewählt werden kann, daß das Siliziumkarbid äußerst feinkörnig anfällt und damit eine zusätzliche Zerkleinerung entfällt. Ein wesentlicher Teil des Herstellungsverfahrens besteht darin, durch Zusätze von Bor und Kohlenstoff das Verhältnis von Korngrenzenenergie zur Oberflächenenergie in ein für ein Sintern unter Schwindung günstiges Verhältnis zu rücken. Da sich Bor in Siliziumkarbid geringfügig löst, erniedrigt es die Korngrenzenenergie, während Kohlenstoff die Oberflächenenergie erhöht, indem er das Siliziumkarbid von der dünnen, immer vorhandenen $SiO_2$-Haut befreit.

In der DE-A-2 624 641 wird beschrieben, daß auch ein druckloses Sintern der α-Modifikation von Siliziumkarbid möglich ist, wenn dieses Siliziumkarbid entsprechend fein aufbereitet ist. Als Sinterzusätze werden ebenfalls Bor und Kohlenstoff verwendet. Ein wesentlicher Vorteil der Möglichkeit des Einsatzes der α-Modifikation von Siliziumkarbid liegt darin, daß es hier zu keiner Phasenumwandlung kommen kann, wie es beim Einsatz der β-Modifikation des Siliziumkarbids beim Überschreiten bestimmter Sintertemperaturen der Fall ist. Diese Phasenumwandlung bei der β-Modifikation des Siliziumkarbids ist mit einem Riesenkornwachstum verbunden, das eine weitere Verdichtung verhindert, oder, falls der Werkstoff schon dicht ist, zu schlechten Festigkeiten führt. Der Sintertemperaturbereich für eine optimale Verdichtung ohne Phasenumwandlung ist für die β-Modifikation des Siliziumkarbids relativ eng und somit in großen Ofenanlagen technisch nur unter erheblichem Aufwand zu beherrschen.

In der EP-A-0 004 031 ist ein dichter polykristalliner Formkörper aus α-Siliziumkarbid und ein Verfahren zu seiner Herstellung durch drucklose Sinterung beschrieben, bei dem α-Siliziumkarbid in Submikronpulverform zusammen mit geringen Mengen eines Aluminium enthaltenden Zusatzes, wie Aluminiumpulver oder einer nicht oxidischen Aluminiumverbindung und eines Kohlenstoff enthaltenden Zusatzes, wie Ruß, Phenol-Formaldehyd-Kondensationsprodukte oder Steinkohlenteerpech unter Formgebung kalt verpreßt und anschließend bei Temperaturen von 2000 bis 2300°C drucklos gesintert wird. Dabei wird von in der DE-A-2 624 641 beschriebenen Versuchen ausgegangen, mit denen nachgewiesen wurde, daß auch bei Verwendung von α-Siliziumkarbid-Pulver als Ausgangsmaterial im drucklosen Verfahren mit Bor und Kohlenstoff enthaltenden Zusätzen bei hohen Sintertemperaturen übertriebenes Kornwachstum auftritt, das zu einem inhomogenen Mikrogefüge im fertigen Sinterkörper führt. Damit weisen die so erhaltenen Sinterkörper eine Dichte von etwa 96% TD (theoretische Dichte) auf, jedoch sind die bei Temperaturen ab 2100°C gesinterten Proben stark rekristallisiert und ihre Heißbiegefestigkeit liegt unterhalb von 300 N/mm². Nur die bei 2050°C gesinterten Proben weisen ein homogenes feinkörniges Mikrogefüge der durchschnittlichen Korngröße von 5 µm auf.

Daraus wird gefolgert, daß die drucklose Sinterung von Siliziumkarbid mit Bor enthaltenden Zusätzen nur schwierig zu bewerkstelligen ist, wenn Sinterkörper mit sowohl hoher Dichte als auch gleichmäßigem feinkörnigem Mikrogefüge erhalten werden sollen.

Um polykristalline Formkörper aus Siliziumkarbid mit verbesserten Eigenschaften, insbesondere einer hohen Warmfestigkeit zur Verfügung stellen zu können, die auf einfache Weise hergestellt werden können, wird nach der EP-A-0 004 031 Aluminium und Kohlenstoff als Zusatz eingesetzt. Dabei liegen Aluminium sowie gegebenenfalls vorhandener Stickstoff und Sauerstoff im wesentlichen in Form einer festen Lösung im Siliziumkarbidgitter vor, so daß sie beispielsweise bis zu einer 2400fachen Vergrößerung nicht als getrennte Phase nachgewiesen werden konnten.

Mit solchen Zusätzen kommt man zu Biegebruchfestigkeiten der Sinterkörper bei Raumtemperatur von mindestens 500 N/mm², die beim Temperaturanstieg bis 1600°C erhalten bleibt. Allerdings ist diese Biegebruchfestigkeit nach dem Dreipunktverfahren gemessen, bei dem sich höhere Meßwerte ergeben als bei dem heute verwendeten Vierpunktverfahren.

Insbesondere aber zeigen auch die nach diesem offenbar am weitesten fortgeschrittenen Verfahren hergestellten polykristallinen Formkörper eine vergleichsweise hohe Steuung, d. h. die fertigen Formkörper weisen untereinander gegebenenfalls stark voneinander abweichende Festigkeiten auf.

Aufgabe der Erfindung ist es, ein Verfahren zur Herstellung von polykristallinen Formkörpern aus Siliziumkarbid vorzuschlagen, der drucklos gesintert ist und trotzdem Festigkeitswerte in der Größenordnung derjenigen von Formkörpern aus heißgepreßtem Siliziumkarbid aufweist und darüber hinaus mit vergleichsweise geringer Streuung hergestellt werden kann.

Diese Aufgabe wird bei einem Verfahren zur Herstellung von polykristallinen Formkörpern aus borhaltigem Siliziumkarbid mit einer Dichte von mindestens 98% der theoretischen Dichte des Siliziumkarbids, durch druckloses, bei Temperaturen von 1900 bis 2200°C erfolgendes Sintern von mindestens 97 Gew.-% $\alpha$- und/oder $\beta$-Siliziumkarbid unter Zugabe von bis zu 3 Gew.-% Bor dadurch gelöst, daß der Formkörper ohne jeden Zusatz von Kohlenstoff zur Masse hergestellt und in einer Kohlenstoff enthaltenden Schutzgasatmosphäre drucklos gesintert wird.

Diese Kohlenstoff enthaltende Schutzgasatmosphäre wird vorzugsweise durch eine Schutzgasatmosphäre verwirklicht, die pyrolysierbare Kohlenwasserstoffe enthält.

Eine Verbesserung läßt sich in Weiterbildung der Erfindung noch dadurch erzielen, daß besonders feines und superreines Siliziumkarbid als Ausgangsmaterial verwendet wird.

So wird man beispielsweise als Siliziumkarbidpulver vorteilhaft ein solches mit einer spezifischen Oberfläche zwischen 10 und 20 m²/g verwenden, bei dem mindestens 95% der Körnung unterhalb 1 µm liegen und das frei von zu Metallen reduzierbaren Verunreinigungen ist, die bei der Sintertemperatur schmelzflüssig sind.

Mit diesem Verfahren lassen sich mit Sicherheit Werte erreichen, die vergleichbar sind mit jenen, die man mit heißgepreßten Siliziumkarbidformkörpern erreichen kann.

Eine weitere Ausgestaltung des Verfahrens ist aus Anspruch 4 ersichtlich.

Die nachfolgende Tabelle zeigt zwei verschiedene Siliziumkarbidformkörper, bei denen der unter I aufgeführte Formkörper nach dem nachgewiesenen Stande der Technik erzeugt ist, der unter II aufgeführte Formkörper nach der vorliegenden Erfindung. Man erkennt deutlich die durch die Erfindung möglichen Steigerungen der einzelnen kritischen Werte des Formkörpers.

Das Sintern unter einer mit in der Gasphase befindlichem Bor angereicherten Atmosphäre ist bereits bekannt. Damit kann das der Erfindung zugrunde liegende Problem allerdings nicht gelöst werden. Denn es hat sich gezeigt, daß verbesserte Festigkeitswerte nur bei Vermeidung des Kohlenstoffeinbringens durch Zumischen erreicht werden können.

| Zusatz | Brenn-atm. | Roh-dichte | $\sigma_{max}$ | $\sigma_\varphi$ | Weibull-modul |
|---|---|---|---|---|---|
| | | | N/mm² | N/mm² | m |
| 2,5 C | Argon | 3,15 | 350 | 300 | 5 |
| 0,5 B | | | | | |
| 0,5 B in der Gasphase | 50% Argon 50% C₃H₈*) | 3,18 | 550 | 520 | 10 |

*) Als Beispiel für alle pyrolisierbaren Kohlenwasserstoffen.

## Patentansprüche

1. Verfahren zur Herstellung eines polykristallinen Formkörpers aus borhaltigem Siliziumkarbid mit einer Dichte von mindestens 98% der theoretischen Dichte des Siliziumkarbids, durch druckloses, bei Temperaturen von 1900 bis 2200°C erfolgendes Sintern von mindestens 97 Gew.-% $\alpha$- und/oder $\beta$-Siliziumkarbid unter Zugabe von bis zu 3 Gew.-% Bor, dadurch gekennzeichnet, daß der Formkörper ohne jeden Zusatz von Kohlenstoff zur Masse hergestellt und in einer Kohlenstoff enthaltenden Schutzgasatmosphäre drucklos gesintert wird.

2. Verfahren nach Anspruch 1, dadurch gekennzeichnet, daß die Kohlenstoff enthaltende Schutzgasatmosphäre pyrolysierbare Kohlenwasserstoffe enthält.

3. Verfahren nach Anspruch 1, dadurch gekennzeichnet, daß als Siliziumkarbidpulver ein solches mit einer spezifischen Oberfläche zwischen 10 und 20 m²/g verwendet wird, bei dem mindestens 95% der Körnung unterhalb 1 µm liegen und das frei von zu Metallen reduzierbaren Verunreinigungen ist, die bei der Sintertemperatur schmelzflüssig sind.

4. Verfahren nach Anspruch 1 oder 2, dadurch gekennzeichnet, daß der Formkörper einer heißisostatischen Preß-Nachbehandlung ausgesetzt wird.

## Claims

1. Process for the manufacture of a shaped polycrystalline article from boron-containing silicon carbide having a density of at least 98% of the theoretical density of silicon carbide by subjecting at least 97% by weight of $\alpha$- and/or $\beta$-silicon carbide with the addition of up to 3% by weight of boron to pressureless sintering at temperatures of from 1900 to 2200°C, characterised in that the shaped article is manufactured without any addition of carbon to the composition and is subjected to pressureless sintering in a carbon-containing protective gas atmosphere.

2. Process according to claim 1, characterised in that the carbon-containing protective gas atmosphere contains pyrolysable hydrocarbons.

3. Process according to claim 1, characterised in that a silicon carbide powder is used which has a specific surface area of between 10 and 20 m²/g, in which at least 95% of the grains are less than 1 µm and which is free of impurities that can be reduced to metals and are molten at the sintering temperature.

4. Process according to claim 1 or 2, characterised in that the shaped article is subjected to a hotisostatic-pressing after-treatment.

## Revendications

1. Procédé de préparation d'un corps polycristallin en carbure de silicium contenant du bore, ayant une densité d'au moins 98% de la densité théorique du carbure de silicium, par frittage exempt de pression, s'effectuant à des températures de 1900 à 2200°C, d'au moins 97% en poids de $\alpha$- et/ou $\beta$-carbure de silicium avec addition jusqu'à 3% poids de bore, caractérisé par le fait que le corps est confectionné sous forme de masse sans aucune addition de carbone et qu'il est fritté sans pression dans une atmosphère protectrice contenant du carbone.

2. Procédé elon la revendication 1, caractérisé par le fait que l'atmosphère protectrice contenant du carbone contient du carbure d'hydrogène pyrolysable.

3. Procédé selon la revendication 1, caractérisé par le fait qu'on utilise comme poudre de carbure de silicium une poudre ayant une surface spécifique entre 10 et 20 m²/g, dont au moins 95% des grains est inférieur à 1 µm et qui est exempt d'impuretés pouvant être réduites à des métaux, qui est en fusion à la température de frittage.

4. Procédé selon la revendication 1 ou 2, caractérisé par le fait que le corps est soumis à un traitement ultérieur par pressage isostatique à chaud.